# EUROPÄISCHE PATENTSCHRIFT

(11) **EP 0 813 478 B1**
(45) Veröffentlichungstag und Bekanntmachung des Hinweises auf die Patenterteilung: **14.10.1998**
(21) Anmeldenummer: 96903899.1
(22) Anmeldetag: 26.02.1996
(51) Int. Cl.: B60M 1/20, B60M 1/30

(54) **Fahrleitungsstützzpunkt**
Support point for an overhead conductor
Support de ligne aerienne

(30) Priorität: 08.03.1995 DE 19508237
(43) Veröffentlichungstag der Anmeldung: 29.12.1997
(73) Patentinhaber: SIEMENS AKTIENGESELLSCHAFT, 80333 München (DE)
(72) Erfinder: UREMOVIC, Nikola, D-91052 Erlangen (DE)
(86) Internationale Anmeldenummer: DE9600318
(87) Internationale Veröffentlichungsnummer: WO9627511

(56) Entgegenhaltungen:
- EP-A- 0 111 730
- DE-A- 1 615 538
- PATENT ABSTRACTS OF JAPAN vol. 13, no. 130 (M-808), 30.März 1989 & JP,A,63 297132 (SANWA TEKKI CORP), 5.Dezember 1988,

## Beschreibung

Die Erfindung betrifft einen Fahrleitungsstützpunkt.

Aufgabe der vorliegenden Erfindung ist es, einen konstruktiv einfach aufgebauten Fahrleitungsstützpunkt zu schaffen.

Die Aufgabe wird erfindungsgemäß durch die Merkmale im Anspruch 1 gelost. Vorteilhafte Ausgestaltungen der Erfindung sind in den weiteren Ansprüchen beschrieben.

Der Fahrleitungsstützpunkt nach Anspruch 1 umfaßt eine erste Platte, bei der zumindest an einer Seite wenigstens ein Schenkel angeordnet ist, der an einer Decke oder einer Wand eines Bauwerks befestigbar ist. Weiterhin umfaßt der Fahrleitungstutzpunkt eine zweite Platte, die aus einem elektrisch leitenden Material gefertigt ist. Die zweite Platte ist uber wenigstens einen Isolator von der ersten Platte beabstandet gehalten. An der zweiten Platte ist an der Seite, die von der ersten Platte abgewandt ist, ein von einem Stromabnehmer beschleifbarer Stromleiter elektrisch leitend befestigt. Ferner ist auf der zweiten Platte parallel zum Stromleiter wenigstens eine Stromverstärkungsleicung angeordnet.

Durch die Anordnung wenigstens einer Stromverstarkungsleitung auf der zweiten Platte, die aus elektrisch leitendem Material gefertigt ist, wird auf einfache Weise eine elektrische Kopplung des Stromleiters mit einer oder mehreren Stromverstärkungsleitungen erreicht. Der erfindungsgemaße Fahrleitungsstutzpunkt ist damit nicht nur für Wechselspannungseinspeisungen sondern auch für Gleichspannungseinspeisungen mit einem hohen Strombedarf geeignet und kann somit individuell auf den jeweiligen Anwendungsfall abgestimmt werden.

Der erfindungsgemäße Fahrleitungsstützpunkt, der sowohl für Stromschienen als auch fur Fahrdrähte aller Art, z.B. Rillenfahrdrahte, gleichermaßen gut geeignet ist, weist einen konstruktiv einfachen Aufbau auf.

Bei einem Fahrleitungsstützpunkt nach Anspruch 3 ergibt sich ein nochmals verbesserter Stromfluß von den Stromverstärkungsleitungen über die zweite Platte zum Stromleiter.

Ein Fahrleitungsstützpunkt nach Anspruch 4 weist bei einem waagrechten Einbau - sowohl die erste Platte als auch die zweite Platte verlaufen dann horizontal - eine erhöhte elektrische Spannungsfestigkeit auf, da die radial weiter außenliegenden Kanten der ersten Platte als Regenabrißkanten wirken und so eine Feuchtigkeitsablagerung auf der zweiten Platte weitestgehend vermieden wird.

Eine nochmals verbesserte Stabilitat und damit ein verbessertes Schwingungsverhalten des Stromleiters gegenüber dem Stromabnehmer weist ein Fahrleitungsstutzpunkt gemäß Anspruch 5 auf.

Die Schenkel, durch die der Fahrleitungsstützpunkt an der Decke bzw. an der Wand eines Bauwerks befestigbar ist, konnen entweder - wie in Anspruch 7 beschrieben ist - einstückig mit der ersten Platte verbunden sein oder die Schenkel können als separate Teile - wie in Anspruch 8 ausgeführt - ausgebildet sein.

Für die Befestigung an geneigt verlaufenden Wänden und horizontaler Stromabnahme bzw. für die Befestigung an senkrecht oder nahezu senkrecht verlaufenden Wänden bei seitlicher Stromabnahme ist ein Fahrleitungsstützpunkt gemaß Anspruch 10 besonders gut geeignet.

Ein Fahrleitungsstutzpunkt nach Anspruch 11 oder 12 ist sowohl fur geneigt verlaufende oder gewölbte Wände als auch für Decken gleichermaßen gut geeignet. Mit dem Fahrleitungsstützpunkt gemaß Anspruch 11 oder 12 läßt sich beim Einbau auf einfache Weise auch die Lage des Stromleiters an auftretende Gleisüberöhungen anpassen.

Bei einem Fahrleitungsstützpunkt nach Anspruch 15 werden die beim Befahren des Gleises auftretenden Schwingungen, die über den Stromabnehmer auf den Stromleiter übertragen werden, im Fahrleitungsstützpunkt gedampft, so daß keine gefährlichen Schwingungen auf die Wand oder die Decke des Bauwerks übertragen werden.

Weitere Vorteile und Einzelheiten der Erfindung ergeben sich aus der nachfolgenden Beschreibung von Ausfuhrungsbeispielen anhand der Zeichnung und in Verbindung mit den weiteren Ansprüchen.

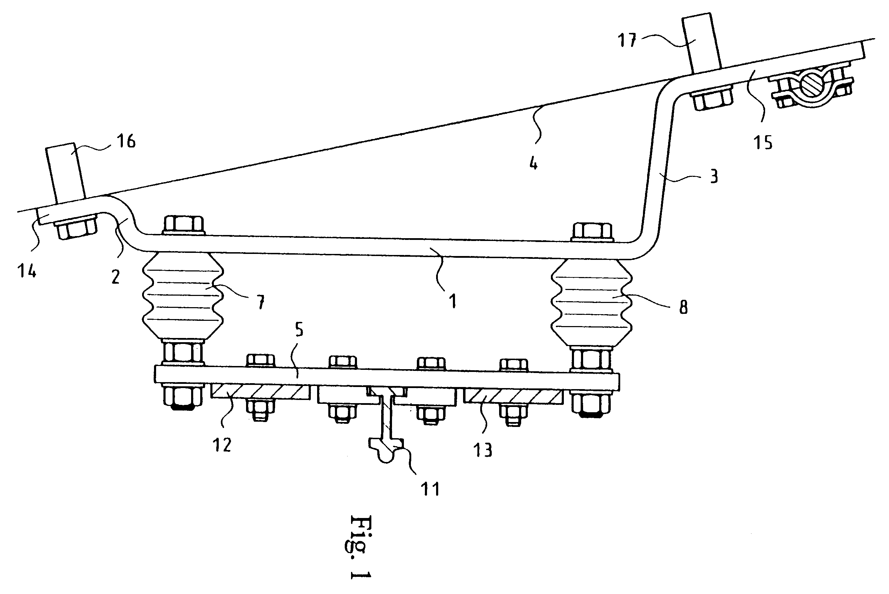

FIG 1 bis 3 zeigen jeweils eine Ausführungsform des erfindungsgemaßen Fahrleitungsstützpunktes für eine Gleichspannungseinspeisung.

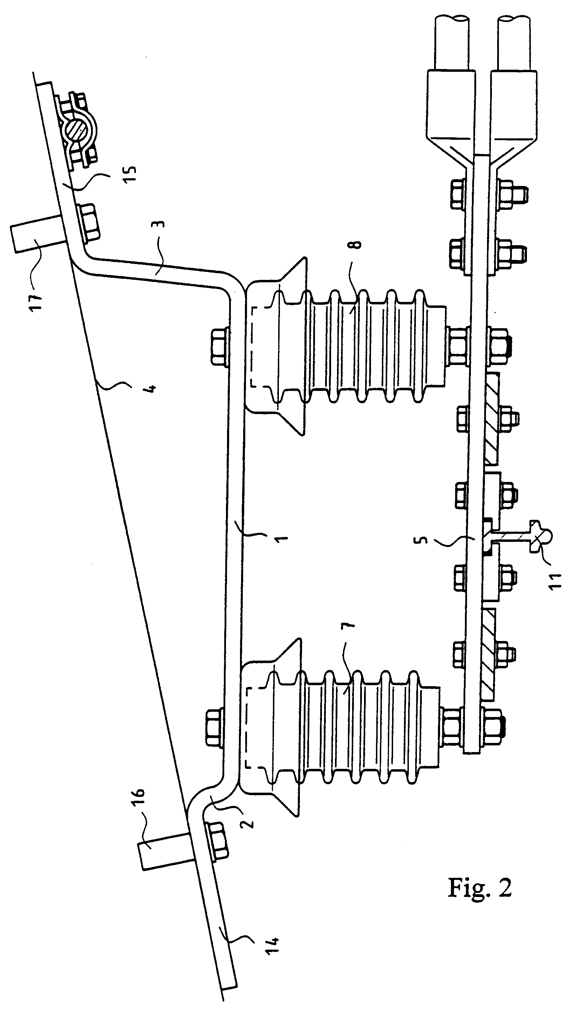

In den FIG 1 und 2 ist mit 1 jeweils eine erste Platte bezeichnet. An zwei parallelen Seiten der ersten Platte 1 ist jeweils ein Schenkel 2 bzw.3 angeordnet. Beide Schenkel 2 und 3 sind mit ihren freien Enden an einer geneigten Decke 4 eines Bauwerks befestigt.

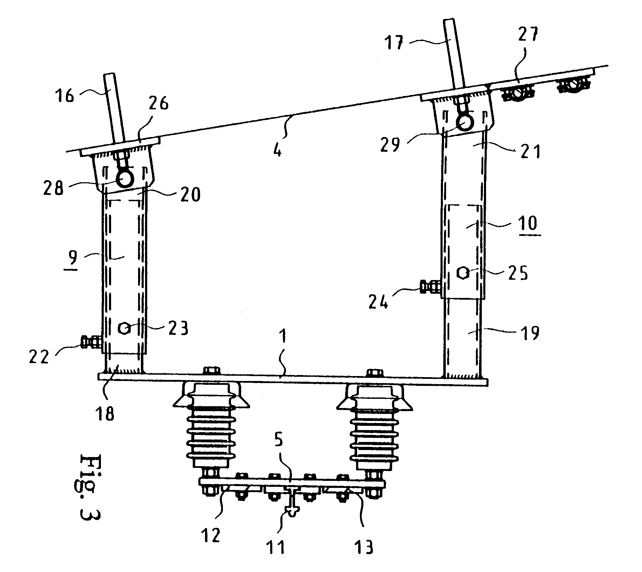

Das in FIG 3 gezeigte ausführungsbeispiel eines Fahrleitungsstützpunktes umfaßt ebenfalls eine erste Platte 1, die an ihren zwei parallelen Seiten jeweils einen Schenkel 9 bzw.10 aufweist. Beide Schenkel 9 und 10 sind in ihrer Länge verstellbar und mit ihren freien Enden ebenfalls an einer geneigten Decke 4 eines Bauwerks befestigt.

Eine zweite Platte 5 ist jeweils über zwei Isolatoren 7 und 8 von der ersten Platte 1 beabstandet gehalten. Erfindungsgemäß ist die zweite Platte 5 aus einem elektrisch leitenden Material, z.B. Kupfer, gefertigt. An der zweiten Platte 5 ist an der von der ersten Platte 1 abgewandten Seite ein Stromleiter 11, der von einem Stromabnehmer beschleifbar ist, elektrisch leitend befestigt.

Die in den FIG 1 bis 3 dargestellten Ausführungsformen des erfindungsgemaßen Fahrleitungsstützpunktes weisen eine erhöhte Spannungsfestigkeit auf, da die erste Platte 1 jeweils langer und breiter ist als die zweite Platte 5. Dadurch wirken die radial weiter außen liegenden Kanten der ersten Platte 1 als Regenabrißkanten, wodurch eine Feuchtigkeitsablagerung auf der zweiten Platte 5 weitestgehend vermieden wird.

Bei den Ausführungsbeispielen gemäß den FIG 1 bis 3 sind auf der zweiten Platte 5 parallel zum Stromleiter 11 Stromverstarkungsleitungen 12 und 13 angeordnet, die als Flachkupferband ausgebildet sind. Bei diesen Ausführungsformen wird der bei einer Gleichspannungseinspeisung erforderliche hohe Strombedarf des Stromleiters 11 auf einfache Weise sichergestellt, da sich über die zweite Platte 5 ein guter Stromfluß von den Stromversorgungsleitungen 12 und 13 zu dem dazwischenliegenden Stromleiter 11 ergibt.

Bei den Fahrleitungsstützpunkten gemäß den FIG 1 und 2 sind die beiden Schenkel 2 und 3 einstückig mit der ersten Platte 1 verbunden und weisen eine unterschiedliche Länge zur ersten Platte 1 auf. Die freien Enden der beiden Schenkel 2 und 3 weisen jeweils einen Abzug 14 bzw.15 mit jeweils mindestens einer Durchgangsbohrung auf. In die Durchgangsbohrung eines jeden Abbugs 14 bzw.15 ist jeweils mindestens ein Befestigungsstift 16 bzw.17 eingesteckt und auf bekannte Weise in die Decke 4 des Bauwerks eingeschraubt.

Die Schenkel 9 und 10 des Fahrleitungsstützpunktes gemäß FIG 3 sind in ihrer Länge einstellbar. Beide Schenkel 9 und 10 umfassen hierfür jeweils ein erstes Rohr 18 bzw.19, das jeweils senkrecht auf der ersten Platte 1 befestigt ist. Auf die freien Enden der ersten Rohre 18 und 19 ist jeweils ein zweites Rohr 20 bzw.21 aufsteckbar und in ihrer Aufstecklänge mittels Schrauben 22 bis 25 festlegbar.

An den der Decke 4 zugewandten Enden der zweiten Rohre 20 und 21 ist jeweils eine Halteplatte 26 bzw.27 befestigt. Die Halteplatte 26 bzw.27 ist jeweils um eine Achse 28 bzw.29 in ihrer Neigung zum zweiten Rohr 20 bzw.21 einstellbar.

Der Fahrleitungsstützpunkt nach FIG 3 ist durch die neigungsverstellbaren Halteplatten 26 und 27 sowie durch die zweiten Rohre 20 und 21 auf einfache Weise in die gewünschte Lage ausrichtbar.

Die Halteplatten 26 und 27 weisen ebenfalls Durchgangsbohrungen auf, in die Befestigungsstifte 16 und 17 einsteckbar sind, die auf bekannte Weise in der Decke 4 des Bauwerks eingeschraubt werden.

Um Schwingungsübertragungen auf das Bauwerk zu reduzieren, ist bei dem Ausführungsbeispiel gemaß FIG 1 zwischen der ersten Platte 1 und dem Isolator 6 ein Dämpfungselement 30 angeordnet.

## Patentansprüche

1. Fahrleitungsstützpunkt, der folgende Merkmale umfaßt:
- eine erste Platte (1), bei der zumindest an einer Seite wenigstens ein Schenkel (2,3;9,10) angeordnet ist, der an einer Decke (4) oder einer Wand eines Bauwerks befestigbar ist,
- eine zweite Platte (5) aus einem elektrisch leitenden Material, die über wenigstens einen Isolator (6-8) von der ersten Platte (1) beabstandet gehalten ist,
- an der zweiten Platte (5) ist an der Seite, die von der ersten Platte (1) abgewandt ist, ein von einem Stromabnehmer beschleifbarer Stromleiter (11) elektrisch leitend befestigt,
- auf der zweiten Platte (5) ist parallel zum Stromleiter (11) wenigstens eine Stromverstärkungsleitung (12,13) angeordnet.

2. Fahrleitungsstützpunkt nach Anspruch 1,
**dadurch gekennzeichnet**,
daß die Stromverstärkungsleitung (12,13) als Flachkupferband ausgebildet ist.

3. Fahrleitungsstützpunkt nach Anspruch 1,
**dadurch gekennzeichnet**,
daß die zweite Platte (5) über zwei Isolatoren (7,8) von der ersten Platte (1) beabstandet gehalten ist.

4. Fahrleitungsstützpunkt nach Anspruch 1,
**dadurch gekennzeichnet**,
daß die erste Platte (1) eine großere Länge und/oder eine größere Breite als die zweite Platte (5) aufweist.

5. Fahrleitungsstützpunkt nach Anspruch 1,
**dadurch gekennzeichnet**,
daß an zwei parallelen Seiten der ersten Platte (1) jeweils ein Schenkel (2,3;9,10) angeordnet ist.

6. Fahrleitungsstützpunkt nach Anspruch 1,
**dadurch gekennzeichnet**,
daß der Schenkel bzw. die Schenkel (2,3) als Flacheisenteile ausgebildet sind.

7. Fahrleitungsstützpunkt nach Anspruch 1,
**dadurch gekennzeichnet**,
daß die Schenkel (2,3) einstückig mit der ersten Platte (1) verbunden sind.

8. Fahrleitungsstützpunkt nach Anspruch 1,
**dadurch gekennzeichnet**,
daß die Schenkel als separate Teile ausgebildet sind.

9. Fahrleitungsstützpunkt nach Anspruch 8,
**dadurch gekennzeichnet**,
daß die Schenkel an die erste Platte (1) anschraubbar sind.

10. Fahrleitungsstützpunkt nach Anspruch 5,
**dadurch gekennzeichnet**,
daß die beiden Schenkel (2,3;9,10) eine unterschiedliche Länge und/oder einen unterschiedlichen Winkel zur ersten Platte (1) aufweisen.

11. Fahrleitungsstützpunkt nach Anspruch 5,
**dadurch gekennzeichnet**,
daß die beiden Schenkel (9,10) in ihrer Länge einstellbar sind.

12. Fahrleitungsstützpunkt nach Anspruch 11,
**dadurch gekennzeichnet**,
daß die beiden Schenkel (9,10) an einem ihrer beiden Enden jeweils Mittel (26-29) aufweisen, durch die der Winkel zwischen der ersten Platte (1) und der Wand des Bauwerks bzw. der Winkel zwischen der ersten Platte (1) und der Decke (4) des Bauwerks einstellbar ist.

13. Fahrleitungsstützpunkt nach Anspruch 1,
**dadurch gekennzeichnet**,
daß an der zweiten Platte (5) ein Stromeinspeisekabel elektrisch leitend befestigt ist.

14. Fahrleitungsstützpunkt nach Anspruch 1,
**dadurch gekennzeichnet**,
daß die erste Platte (1) oder einer der Schenkel (2,3;9,10) einen Erdungsanschluß aufweist.

15. Fahrleitungsstützpunkt nach Anspruch 1,
**dadurch gekennzeichnet**,
daß zwischen Isolator und erster Platte (1) und/oder zwischen Isolator und zweiter Platte (1) und/oder parallel zum Isolator (6-8) wenigestens ein Dämpfungselement angeordnet ist.

## Claims

1. Overhead traction wire support which comprises the following features:
- a first plate (1), in the case of which there is arranged at least on one side at least one leg (2, 3; 9, 10) which can be secured to a ceiling (4) or a wall of a structure,
- a second plate (5) which consists of an electrically conductive material and which, by way of at least one insulator (6-8), is held at a distance from the first plate (1),
- a current conductor (11), along which a current collector can slide, is secured, in an electrically conductive manner, to the second plate (5) on the side which is remote from the first plate (1),
- at least one current-amplification line (12, 13) is arranged on the second plate (5) so as to be parallel to the current conductor (11).

2. Overhead traction wire support according to claim 1, characterised in that the current-amplification line (12, 13) is formed as a flat copper strip.

3. Overhead traction wire support according to claim 1, characterised in that the second plate (5) is held at a distance from the first plate (1) by way of two insulators (7, 8).

4. Overhead traction wire support according to claim 1, characterised in that the first plate (1) is of a greater length and/or a greater width than the second plate (5).

5. Overhead traction wire support according to claim 1, characterised in that a leg (2, 3; 9, 10) is arranged, in each case, on two parallel sides of the first plate (1).

6. Overhead traction wire support according to claim 1, characterised in that the leg or the legs (2, 3) are formed as flat iron portions.

7. Overhead traction wire support according to claim 1, characterised in that the legs (2, 3) are connected to the first plate (1) in one piece therewith.

8. Overhead traction wire support according to claim 1, characterised in that the legs are formed as separate portions.

9. Overhead traction wire support according to claim 8, characterised in that the legs can be screwed onto the first plate (1).

10. Overhead traction wire support according to claim 5, characterised in that the two legs (2, 3; 9, 10) are of a different length and/or are at a different angle from the first plate (1).

11. Overhead traction wire support according to claim 5, characterised in that the length of the two legs (9, 10) is adjustable.

12. Overhead traction wire support according to claim 11, characterised in that the two legs (9, 10) at one of their two ends respectively have means (26-29) by which the angle between the first plate (1) and the wall of the structure or the angle between the first plate (1) and the ceiling (4) of the structure can be adjusted.

13. Overhead traction wire support according to claim 1, characterised in that a power-supply cable is secured to the second plate (5) in an electrically conductive manner.

14. Overhead traction wire support according to claim 1, characterised in that the first plate (1) or one of the legs (2, 3; 9, 10) has an earth connection.

15. Overhead traction wire support according to claim 1, characterised in that at least one damping element is arranged between the insulator and the first plate (1) and/or between the insulator and the second plate (1 - sic) and/or parallel to the insulator (6-8).

## Revendications

1. Point de support de caténaire, qui comprend les caractéristiques suivantes :
- une première plaque (1), dans laquelle est disposée au moins d'un côté au moins une branche (2, 3 ; 9, 10) qui peut être fixée à un toit (4) ou à un mur d'une bâtisse,
- une seconde plaque (5) en un matériau conducteur d'électricité, qui est maintenue à distance de la première plaque par au moins un isolateur (6 à 8),
- un conducteur (11) de courant, sur lequel peut frotter un balai conducteur, est fixé de manière conductrice de l'électricité à la seconde plaque (5) du côté éloigné de la première plaque (1),
- au moins un conducteur (12, 13) à amplification de courant est disposé sur la deuxième plaque (5) parallèlement au conducteur (11) de courant.

2. Point de support de caténaire suivant la revendication 1, caractérisé en ce que le conducteur (12, 13) à amplification de courant est formé en tant qu'un ruban de cuivre plat.

3. Point de support de caténaire suivant la revendication 1, caractérisé en ce que la seconde plaque (5) est maintenue à distance de la première plaque (1) par deux isolants (7, 8).

4. Point de support de caténaire suivant la revendication 1, caractérisé en ce que la première plaque (1) a une longueur plus grande et/ou une largeur plus grande que la deuxième plaque (5).

5. Point de support de caténaire suivant la revendication 1, caractérisé en ce qu'il est disposé de deux côtés parallèles de la première plaque (1) une branche (2,3 ; 9, 10) respective.

6. Point de support de caténaire suivant la revendication 1, caractérisé en ce la ou les branches (2, 3) sont sous la forme de pièces en fer plat.

7. Point de support de caténaire suivant la revendication 1, caractérisé en ce que les branches (2, 3) sont d'une pièce avec la première plaque (1).

8. Point de support de caténaire suivant la revendication 1, caractérisé en ce que les branches sont formées en tant que pièces distinctes.

9. Point de support de caténaire suivant la revendication 8, caractérisé en ce que les branches peuvent être vissées à la première plaque (1).

10. Point de support de caténaire suivant la revendication 5, caractérisé en ce que les deux branches (2, 3 ; 9, 10) ont une longueur différente et/ou font un angle diffèrent avec la première plaque (1).

11. Point de support de caténaire suivant la revendication 5, caractérisé en ce que les deux branches (9, 10) peuvent être réglées en ce qui concerne leur longueur.

12. Point de support de catènaire suivant la revendication 11, caractérisé en ce que les deux branches (9, 10) comportent à leurs deux extrémités chacune des moyens (26 à 29) par lesquels l'angle entre la première plaque (1) et la paroi de la bâtisse où l'angle entre la première plaque (1) et le toit (4) de la bâtisse peut être réglé.

13. Point de support de caténaire suivant la revendicaticn 1, caractérisé en ce que à la seconde plaque (5) est fixé un câble d'alimentation en courant de manière conductrice de l'électricité.

14. Point de support de caténaire suivant la revendication 1, caractérisé en ce que la première plaque (1) ou l'une des branches (2, 3 ; 9, 10) a une borne à la masse.

15. Point de support de caténaire suivant la revendication 1, caractérisé en ce qu'il est disposé entre l'isolateur et la première plaque (1) et/ou entre l'isolateur et la seconde plaque (5) et/ou parallèlement aux isolants (6 à 8) au moins un élément d'amortissement.
